(19) Europäisches Patentamt
European Patent Office
Office européen des brevets

(11) **EP 1 949 197 B1**

(12) **EUROPEAN PATENT SPECIFICATION**

(45) Date of publication and mention
of the grant of the patent:
**17.03.2010 Bulletin 2010/11**

(51) Int Cl.:
***G05D 7/01*** *(2006.01)*      ***F16K 31/00*** *(2006.01)*

(21) Application number: **06805533.4**

(22) Date of filing: **24.10.2006**

(86) International application number:
**PCT/DK2006/000593**

(87) International publication number:
**WO 2007/048410 (03.05.2007 Gazette 2007/18)**

(54) **A FLOW SYSTEM AND A MICRO FLUIDIC SYSTEM COMPRISING A FLOW SYSTEM**

STRÖMUNGSSYSTEM UND MIKROFLUIDISCHES SYSTEM MIT EINEM STRÖMUNGSSYSTEM

SYSTEME D'ECOULEMENT ET SYSTEME MICRO-FLUIDIQUE COMPORTANT UN SYSTEME D'ECOULEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.10.2005  DK 200501483**

(43) Date of publication of application:
**30.07.2008   Bulletin 2008/31**

(73) Proprietor: **CeQur ApS**
**6430 Nordborg (DK)**

(72) Inventors:
• **DIRAC, Holger**
 **DK-3460 Birkerød (DK)**
• **GRAVESEN, Peter**
 **DK-6430 Nordborg (DK)**
• **SCHWEITZ, Kasper Oktavio**
 **DK-3400 Hillerød (DK)**

(74) Representative: **Inspicos A/S**
**Kogle Allé 2**
**P.O. Box 45**
**2970 Hørsholm (DK)**

(56) References cited:
**US-A- 3 144 879      US-A- 3 904 111**
**US-A- 3 977 600      US-A- 4 759 883**
**US-A1- 2005 045 733**

**Description**

FIELD OF THE INVENTION

The present invention relates to a flow system, in particular for use in a micro fluidic system. The flow system of the present invention exhibits a flow resistance which is less temperature sensitive than the flow resistance of prior art flow systems.

BACKGROUND OF THE INVENTION

Flow systems, in particular flow systems with flow restrictors, can be used for accurately controlling the flow rates of fluidic systems, in particular micro fluidic systems. This may, e.g., be obtained by use of a constant pressure pump. The flow resistance of a flow system depends linearly on the viscosity of the fluid being transported in the flow system. The viscosity of a fluid, however, varies significantly with temperature. For example, in the case of water the viscosity decreases on average by 2.3 % per °C when the temperature increases from 20°C to 30°C. Furthermore, this variation is typically non-linear and therefore difficult to control or compensate for. Accordingly, the flow resistance of a flow system varies significantly and non-linearly with temperature, and in order to obtain constant flow rates with high precision it is therefore necessary to keep the temperature at least substantially fixed.

Constant flow rates with high precision are, e.g., desirable when the flow system is or forms part of a drug delivery system or a high precision fluid analysis apparatus, such as a medical device for analysing body fluids, e.g. an apparatus for measuring the concentration of blood glucose in a blood sample. Such apparatuses should operate reliably and consistently regardless of the time and place of use. In case the flow system is portable, which may, e.g., be the case for a blood glucose measurement apparatus, it is very likely that a user would consider using it in environments of varying temperature, e.g. indoors as well as outdoors, at various times of the year, etc. It is therefore very undesirable that the flow resistance of flow systems in the apparatus varies significantly with the temperature.

The document US3977600 describes a temperature responsive fluid flow regulator having a body piece with fluid inlet and outlet passageways and an intermediate fluid chamber. An elastomeric member is disposed within the body piece and is confined therein and has an orifice aligned with the outlet. The member is responsive to temperature changes, and a restraining member confines it such that an increase in temperature causes a reduction in the size of the orifice to thus control the flow of fluid through the regulator. An adjustable needle is also utilized for further controlling the flow through the regulator.

The elastomeric member has a central and circularly-shaped orifice extending therethrough, and the orifice is aligned with and thus is in fluid-flow communication with the body piece outlet so that flow can go from the body piece chamber and past the elastomeric member and through the body piece outlet.

The elastomeric member is free to expand in response to an increase in the temperature in the fluid flowing through the unit, and the elastomeric member is of a characteristic which will cause it to expand in response to a temperature increase as mentioned. Accordingly, when the temperature of the fluid increases, the only expansion possible with regard to the elastomeric member is to have the elastomeric member expanding in a direction toward its center and to thereby reduce its orifice, and thus there is a regulating or a reduction of the flow of fluid past the elastomeric member.

This system is however not easily applied in a micro fluidic system where such moving mechanical parts as the adjustable needle would not be desirable. Other ways to calibrate the system to the desired flow resistance/temperature relation would be needed.

The document US4759883 discloses a temperature compensated carburetor having a fuel metering system including a variable restriction needle gate valve for varying the effective flow cross-sectional area of the main and/or idle fuel supply duct to modulate the flow rate of fuel to the carburetor venturi mixing passage. The needle gate valve is made of plastic material having a much greater coefficient of expansion than the aluminum carburetor body in which it is adjustably mounted, such that differential linear expansion and contraction of the needle valve relative to the carburetor body in response to ambient temperature changes varies the flow-controlling cross-sectional area of the fuel duct inversely relative to ambient temperature changes.

SUMMARY OF THE INVENTION

It is, thus, an object of the invention to provide a flow system which is less temperature sensitive than prior art flow systems, and where the calibration of the system to the desired flow resistance/temperature relation is passively build into the system.

It is a further object of the invention to provide a flow system having a flow resistance which is at least substantially independent of an ambient temperature, at least within a specified temperature interval.

It is an even further object of the invention to provide a flow system exhibiting a reliable and at least substantially constant flow rate.

It is an even further object of the invention to provide a micro fluidic system exhibiting an at least substantially constant flow rate without the need to control an ambient temperature.

According to a first aspect of the invention the above and other objects are fulfilled by providing a flow system according to claim 1.

The first part has at least one flow channel formed therein. At least one flow channel may be positioned in an outer region of the first part. Thus, it may be a groove formed in an outer surface of the first part. Alternatively or additionally, at least one flow channel may be positioned in an interior region of the first part. In this case the flow channel may be formed by drilling a channel in the first part. Alternatively and preferably, the first part may be formed by two or more sections made from the same material, one section having the flow channel formed therein as a groove in an outer surface, and another section forming a lid to the groove.

The first part and the second part are arranged relatively to each other in such a way that, in response to a change in an ambient temperature, the first and the second parts cooperate to cause corresponding change(s) in the flow channel(s). As described above the viscosity of a fluid normally decreases as the ambient temperature increases, and vice versa. Accordingly the flow resistance of a flow channel in which the fluid is being transported will change as the ambient temperature changes. According to the invention this change in flow resistance is counteracted by selecting the first and second materials in an appropriate manner, and by designing and positioning the first and second parts relatively to each other in an appropriate manner, as a result obtaining physical changes to at least one section of the flow channel(s), thereby causing a change in the flow resistance of at least that/these section(s). This change at least substantially counteracts the change in flow resistance caused by the change in viscosity of the fluid. Thereby it is obtained that the resulting flow resistance of the flow system is at least substantially independent of the ambient temperature. This is very advantageous because it is thereby possible to maintain an at least substantially constant flow resistance of the flow system, regardless of the ambient temperature, at least within a specified temperature range. A desired flow resistance is thereby obtained without the need for controlling the ambient temperature, and the problems described above can thereby be relieved.

The section(s) may form a smaller or larger part of the flow channel(s). In one embodiment the flow system may comprise only one flow channel, and the section may be the complete flow channel.

In one embodiment the first coefficient of thermal expansion may be higher than the second coefficient of thermal expansion. In this case the first and second parts may be arranged relatively to each other in such a way that the second part restricts thermal expansion of the first part in at least one direction.

In this case the first part will expand or contract more than the second part as the ambient temperature changes. The first and second parts may therefore advantageously be positioned relatively to each other in such a way that the second part restricts the thermal expansion of the first part in such a way that the material of the first part is forced into the flow channel(s) when the ambient temperature increases, and retracts from the flow channel(s) when the ambient temperature decreases. Thereby the size of a cross section of the flow channel(s) and/or the shape of an outer contour of a cross section of the flow channel(s) will change, and accordingly the flow resistance of the flow channel will increase/decrease when the ambient temperature increases/decreases.

The difference between the first coefficient of thermal expansion and the second coefficient of thermal expansion may be sufficiently large to ensure that thermal expansions of the second part are negligible as compared to thermal expansions of the first part. In this embodiment it may be assumed that the second part does not expand as the ambient temperature increases while the first part does expand, and the second part may therefore efficiently restrict the thermal expansion of the first part in the direction(s) where the second part is positioned relatively to the first part.

The first material may comprise a polymer material, including, but not limited to, polystyrene (PS), polyethylene terephtalate glycol (PETG), cyclic olefin copolymer (COC), and/or any other suitable polymer material.

The second material may comprise a metal and/or a semiconductor, including, but not limited to, silicon, aluminium, copper, and/or any other suitable metal or semiconductor.

Alternatively or additionally, the first and second materials may comprise any other suitable materials having appropriate properties with regard to coefficient of thermal expansion.

Alternatively, the second, coefficient of thermal expansion may be higher than the first coefficient of thermal expansion, and the first and second parts may be arranged relatively to each other in such a way that the first part restricts thermal expansion of the second part in at least one direction. In this case the second material may comprise a polymer material and/or the first material may comprise a metal and/or a semiconductor. The materials mentioned above will also be suitable in this case.

The first part and/or the second part is/are further provided with one or more additional channels, said additional channel(s) being positioned in such a way that it/they cooperate with the first and second parts in causing corresponding change(s) in the flow channel(s). The additional channel(s) preferably has/have a size, shape and position which allows some material to enter the additional channel(s) when the ambient temperature increases and the first or second part accordingly expands. Thereby the amount of material which is forced into the flow channel(s) may be reduced. Thus, by selecting the size, shape and position of the additional channel(s) appropriately and with due consideration to the coefficients of thermal expansion of the first and second materials as well as the size, shape and position of the flow channel(s), it is possible to control the amount of material entering the flow channel(s) when the ambient temperature increases, and thereby it is possible to control the resulting increase in flow resistance.

The corresponding change(s) in the flow channel(s) may comprise a change in a cross sectional area of at least one of the flow channel(s) and/or it may comprise a change in a shape of at least one of the flow channel(s). This has already been described above.

The specified temperature interval preferably comprises temperatures at which it is likely that the flow system will be used. Thus, it preferably comprises temperatures which would be experienced under normal conditions, such as room temperature/indoor temperature as well as outdoor temperatures at which it is likely that the flow system will be used.

Thus, the specified temperature range may be -15°C to 50°C, such as 0°C to 30°C, such as 10°C to 25°C, or any other suitable temperature interval.

At least the at least one section of the flow channel(s) may be or comprise a flow restriction. This may, e.g., be in the form of a capillary tube or another kind of tube having a section with a smaller cross sectional area than the remaining part of the tube. Such a flow restriction is preferably in the form of a channel and forms part of the flow system. The flow restriction may have any suitable geometry, including a square, a rectangular, a triangular, a circular, an oval or any other suitably shaped cross section.

The first coefficient of thermal expansion and/or the second coefficient of thermal expansion may be within the range $10^{-6}$ per °C to $10^{-3}$ per °C, such as within the range $10^{-5}$ per °C to $10^{-4}$ per °C. However, as mentioned above, in order to obtain the desired effect, the first coefficient of thermal expansion and the second coefficient of thermal expansion should not be identical or even similar. In case the first or second material is the polystyrene material known as PS158K manufactured by BASF the coefficient of thermal expansion is approximately $0.8 \times 10^{-4}$ per °C.

According to a second aspect of the invention the above and other objects are fulfilled by providing a micro fluidic system comprising an inlet opening, an outlet opening and at least one flow system according to the first aspect of the invention.

It should be noted that a skilled person would readily recognise that any feature described in combination with the first aspect of the invention can also be combined with the second aspect of the invention, and vice versa. In the present context the term 'micro fluidic system' should be interpreted to mean a system having dimensions which are sufficiently small to at least substantially prevent turbulence in a fluid flowing in the system.

The micro fluidic system may be or form part of a fluid analysis device, e.g. a medical device, such as a device for measuring a parameter of a body fluid, e.g. a concentration of blood glucose in a blood sample. In this case it is very desirable that the flow resistance of the micro fluidic system is at least substantially independent of the ambient temperature, at least within a specified temperature interval, since it is thereby ensured that the device operates in a reliable and consistent manner, even if the ambient temperature changes.

Alternatively, the micro fluidic system may be or form part of an infusion system or a drug delivery system, e.g. an insulin pump device.

BRIEF DESCRIPTION OF THE DRAWINGS

The invention will now be further described with reference to the accompanying drawings in which

Figs. 1-9 are cross sectional views of various embodiments of a flow system according to the invention,

Fig. 10 is a cross sectional view of a flow system according to one embodiment of the invention shown at a low and a high temperature, respectively,

Fig. 11 is a cross sectional view of a flow system according to another embodiment of the invention shown at a low and a high temperature, respectively, and

Fig. 12 is a cross sectional view of part of the flow system of Fig. 10.

DETAILED DESCRIPTION OF THE DRAWINGS

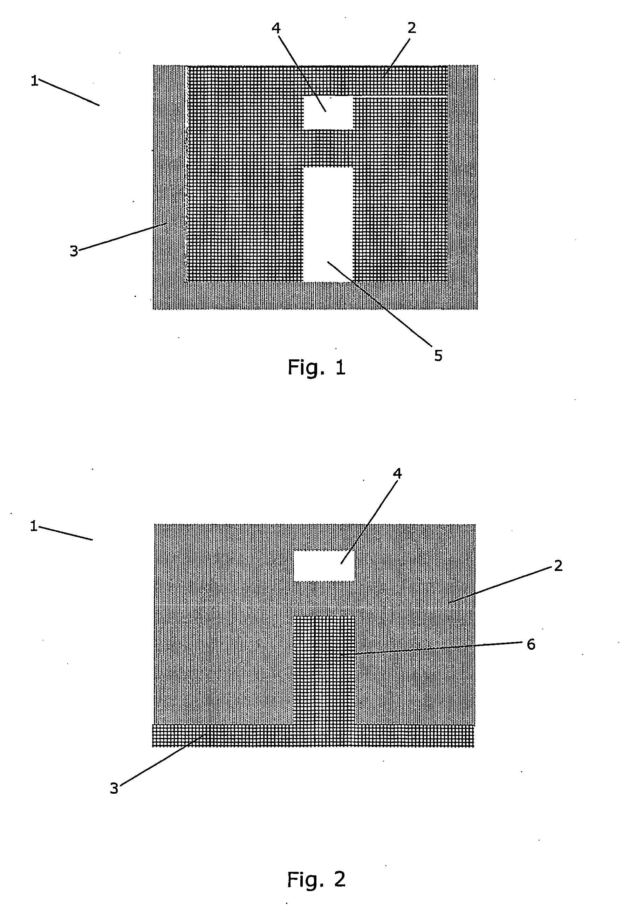

Fig. 1 is a cross sectional view of a flow system 1 according to an embodiment of the invention. The flow system 1 of Fig. 1 comprises a first part 2 and a second part 3. The first part 2 is positioned in a recess in the second part 3, and the second part 3 thereby abuts the first part 2 along three sides of the cross section. The first part 2 has a flow channel 4 formed therein. Furthermore, at a position corresponding to the position of the flow channel 4 an additional channel 5 is formed.

The material making up the first part 2 has a coefficient of thermal expansion which is higher than the coefficient of thermal expansion of the material making up the second part 3. Therefore, when the ambient temperature increases, the first part 2 would, in the absence of the second part 3, expand more than the second part 3. The difference between the coefficients of thermal expansion may be chosen in such a way that thermal expansion of the second part 3 is negligible as compared to thermal expansion of an isolated first part 2, and it may therefore be assumed that the second part 3 does not expand as the ambient temperature increases. Accordingly, it will not be possible for the material of the first part 2 to expand in the directions where the second part 3 abuts the first part 2. As a consequence, the thermal stress build-up in the first part 2 will result in closing up of the flow channel 4 and the additional channel 5. Thereby the size and/or the shape of the outer contour of the flow channel 4 is/are changed in such a way that the flow resistance of the flow channel 4 is increased.

Knowing the initial size/shape of the flow channel 4, the coefficients of thermal expansion of the first part 2 and the second part 3, as well as the temperature interval in which it is most likely that the flow system 1 will be used, it is possible to design the size, shape and position of the additional channel 5 in such a way that the increase in flow resistance caused by the thermal expansion of the first part 2 as described above at least substantially counter-balances the decrease in flow resistance caused by the increase in temperature of the fluid being transported by the flow system 1. Thereby it is obtained that the resulting flow resistance of the flow channel 4 is at least substantially constant even though the ambient temperature varies.

In the example of Fig. 1 two effects will contribute to the increase in flow resistance of the flow channel 4 caused by the thermal expansion of the first part 2. Bulk material of the first part 2, i.e. material positioned on either side of the flow channel 4/the additional channel 5, and between these and the second part 3 is pushed into the flow channel 4 and the additional channel 5, thereby narrowing the widths of the channels 4, 5. Furthermore, the material present between the flow channel 4 and the additional channel 5 will bend or expand into the flow channel 4 and/or the additional channel 5, thereby reducing the height of the flow channel 4. In most cases the effect caused by the bulk material of the first part 2 will be the more significant of the two. However, in case the dimensions of the flow channel 4 are such that the width of the flow channel 4 is much larger than the height of the flow channel 4, the reduction in height of the flow channel 4 caused by the material present between the flow channel 4 and the additional channel 5 may be the most significant contribution to the increase in flow resistance of the flow channel 4.

Thus, in the example shown in Fig. 1 the distance between the lower edge of the flow channel 4 and the upper edge of the additional channel 5 is an important parameter, because this distance, and thereby the 'thickness' of the material present in this region, determines how much the region may be squeezed by the bulk material, and thereby how much the width of the flow channel 4 is decreased as the ambient temperature increases. If the depth of the additional channel 5 is increased (i.e. the distance between the flow channel 4 and the additional channel 5 is decreased), the region will be easier compressed, the decrease in width of the flow channel 4 will become larger, and the increase in flow resistance will thereby become larger. Thus, the change in flow resistance caused by thermal expansion becomes more temperature sensitive if the depth of the additional channel 5 is increased. Similarly, the change in flow resistance becomes less temperature sensitive if the depth of the additional channel 5 is decreased. By selecting appropriate dimensions for the additional channel 5 (as well as for the flow channel) it can therefore be obtained that the resulting change in flow resistance counter-balances the change in flow resistance caused by a change in viscosity of the fluid being transported in the flow channel 4.

Fig. 2 is a cross sectional view of a flow system 1 according to another embodiment of the invention. The flow system 1 of Fig. 2 also comprises a first part 2 and a second part 3. The first part 2 has a flow channel 4 formed therein. In the embodiment of Fig. 2 the second part 3 is positioned adjacent to one side of the first part 2 and inside a recess formed in the first part 2.

The material making up the first part 2 has a coefficient of thermal expansion which is lower than the coefficient of thermal expansion of the material making up the second part 3. The difference in the coefficients of thermal expansion may be sufficient to assume that thermal expansion of the first part 2 is negligible as compared to thermal expansion of an isolated second part 3 when the ambient temperature varies within a specific temperature interval. Thus, it may be assumed that the first part 2 does not undergo thermal expansion, and the first part 2 will thereby restrict the expansion of the material of the second part 3, similarly to the situation described above, but with the first 2 and second 3 parts in reverse 'roles'.

When the ambient temperature increases the material of the second part 3 will attempt to expand. However, this expansion is restricted by the first part 2. The material of the portion 6 of the second part 3 which is positioned in the recess of the first part 2 will expand sideways, thereby introducing stress in the first part 2, at least in an area near the flow channel 4. This will cause the width of the first part 2 to increase, and, as a consequence, the height of the first part 2 is decreased as described by the theory of elasticity. Thereby the width of the flow channel 4 is increased, and the height of the flow channel 4 is decreased. This change in the dimensions of the flow channel 4 will cause an increase in the flow resistance of the flow channel 4. It should be noted that, in order to obtain this effect, the recess in the first part 2 should be positioned sufficiently close to the flow channel 4 to ensure that the sideways expansion of the portion 6 is transferred to the region near the flow channel 4.

Furthermore, the material of the portion 6 is prevented from expanding in a downwards direction due to the remaining portion of the second part 3. As a consequence, material from the portion 6 will push material from the first part 2, which is present between the portion 6 and the flow channel 4, into the flow channel 4, thereby further reducing the height of the flow channel 4. However, in most cases this effect will be less significant than the effect described above.

As it is the case with the embodiment shown in Fig. 1, it is possible to design the size, shape and position of the flow channel 4 and of the recess of the first part 2 which contains a portion 6 of the second part 3 in such a way that the increase in flow resistance at least substantially counter-balances the decrease in flow resistance due to an increased temperature of the fluid being transported by the flow system 1. Thus, the increase in flow resistance can be adjusted to a desired level merely by selecting an appropriate distance between the recess and the flow channel 4.

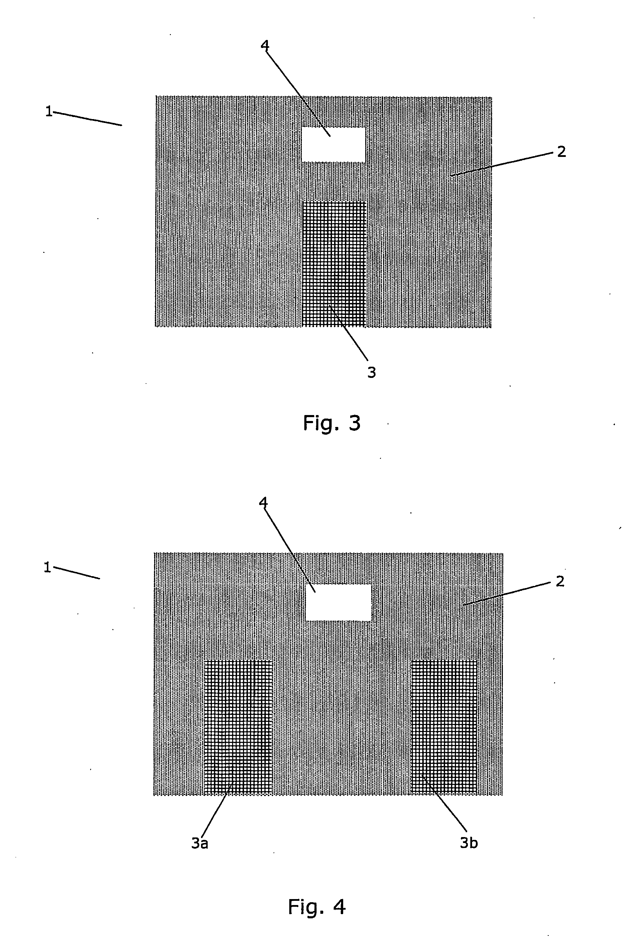

Fig. 3 is a cross sectional view of a flow system 1 according to yet another embodiment of the invention. The flow system 1 comprises a first part 2 and a second part 3. The first part 2 has a flow channel 4 formed therein. The embodiment shown in Fig. 3 is very similar to the embodiment of Fig. 2, and the remarks set forth above are therefore equally applicable here. However, in the embodiment of Fig. 3 the second part 3 is only positioned in the recess of the first part 2, i.e. it does not abut one of the sides of the first part 2. This has the effect that it is possible for the second part 3 to expand in a downwards direction. As a consequence, the amount of material from the first part 2 being pushed into the flow channel 4 due to the thermal expansion of the material of the second part 3 is less than in the setup shown in Fig. 2.

Fig. 4 is a cross sectional view of a flow system 1 according to yet another embodiment of the invention. The flow system 1 comprises a first part 2 with a flow channel 4 formed therein, and a second part 3. As it is the case in the embodiments of Figs. 2 and 3, the material of the first part 2 has a coefficient of thermal expansion which is lower than the coefficient of thermal expansion of the material of the second part 3.

In the embodiment of Fig. 4 the second part 3 is formed by two separate portions 3a, 3b, each positioned in a recess formed in the first part 2. When the ambient temperature increases, the material of the second part 3 will attempt to expand, but the expansion will be restricted by the first part 2. Accordingly, expansion of the portions 3a, 3b in a sideways direction will result in an increase in the width of the first part 2 and a corresponding decrease in the height of the first part 2. This, in turn, results in an increase in the width of the flow channel 4 and a decrease in the height of the flow channel 4. As a consequence, the flow resistance of the flow channel 4 is increased. This is essentially the same mechanism as the one in the example shown in Fig. 3. However, the impact on the dimensions of the flow channel 4 might be less in this case.

As it is the case with the embodiments shown in Figs. 1-3, the increase in flow resistance can be adjusted by selecting the sizes, shapes and positions of the flow channel 4 and of the portions 3a, 3b, and the increase in flow resistance may thereby be adjusted to at least substantially counter-balance a decrease in flow resistance due to an increased temperature of a fluid being transported by the flow system 1. In the embodiment of Fig. 4 the important design parameters in this regard are the distance between the two portions 3a, 3b and the depths and widths of the recesses of the first part 2 containing the portions 3a, 3b.

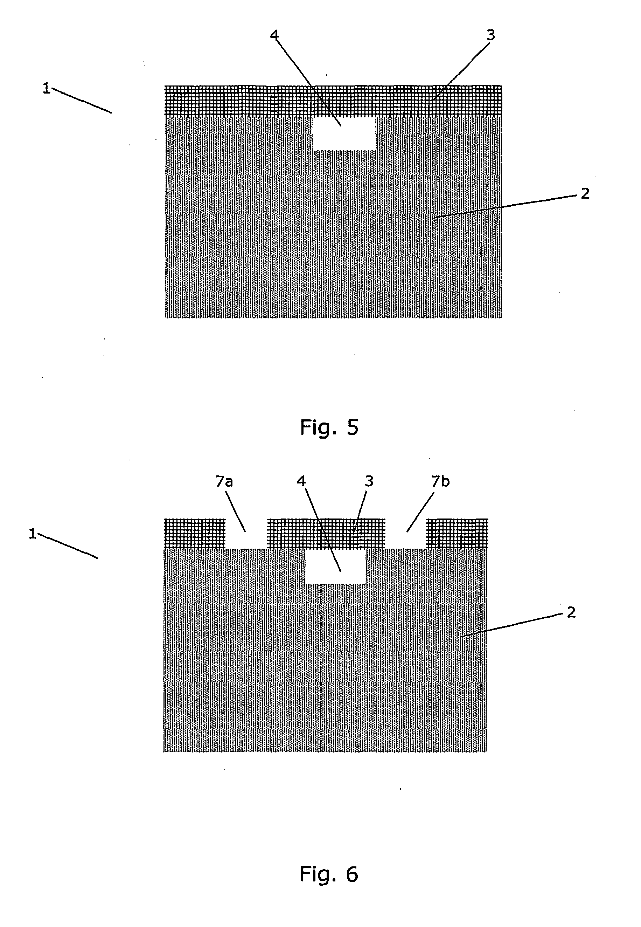

Fig. 5 is a cross sectional view of a flow system 1 according to yet another embodiment of the invention. The flow system 1 comprises a first part 2 with a flow channel 4 formed therein, and a second part 3. As it is the case in the embodiments of Figs. 2-4, the material of the first part 2 has a coefficient of thermal expansion which is lower than the coefficient of thermal expansion of the material of the second part 3.

In the embodiment of Fig. 5 the second part 3 abuts a side of the first part 2 in which the flow channel 4 is formed. Thus, one side wall of the flow channel 4 is formed by the second part 3. When the ambient temperature increases and the second part 3 therefore expands, it will expand in a sideways direction. This sideways expansion of the second part 3 will stretch the material of the first part 2, thereby causing an increase in the width of the first part 2 and a corresponding decrease in the height of the first part 2, at least in a region near the flow channel 4. Similarly to what is described above, the width of the flow channel 4 will thereby increase, and the height of the flow channel 4 will decrease. By selecting appropriate dimensions for the flow channel 4, e.g. the width of the flow channel 4 being much larger than the height of the flow channel 4, the result will be that the flow resistance of the flow channel 4 increases as a consequence of the dimensional changes.

Fig. 6 is a cross sectional view of a flow system 1 according to yet another embodiment of the invention. The flow system 1 comprises a first part 2 with a flow channel 4 formed therein, and a second part 3. As it is the case in the embodiments of Figs. 2-5, the material of the first part 2 has a coefficient of thermal expansion which is lower than the coefficient of thermal expansion of the material of the second part 3.

The embodiment of Fig. 6 is very similar to the embodiment of Fig. 5, and the remarks set forth above are therefore equally applicable here. However, in the embodiment of Fig. 6 the second part 3 is provided with two recesses or holes 7a, 7b. In the embodiment of Fig. 6, the material of the second part 3 is, thus, allowed at least partially to expand into the recesses 7a, 7b. Thereby it is avoided, at least to some extent, that the thermal stress build-up in the whole composite will lead to significant warping.

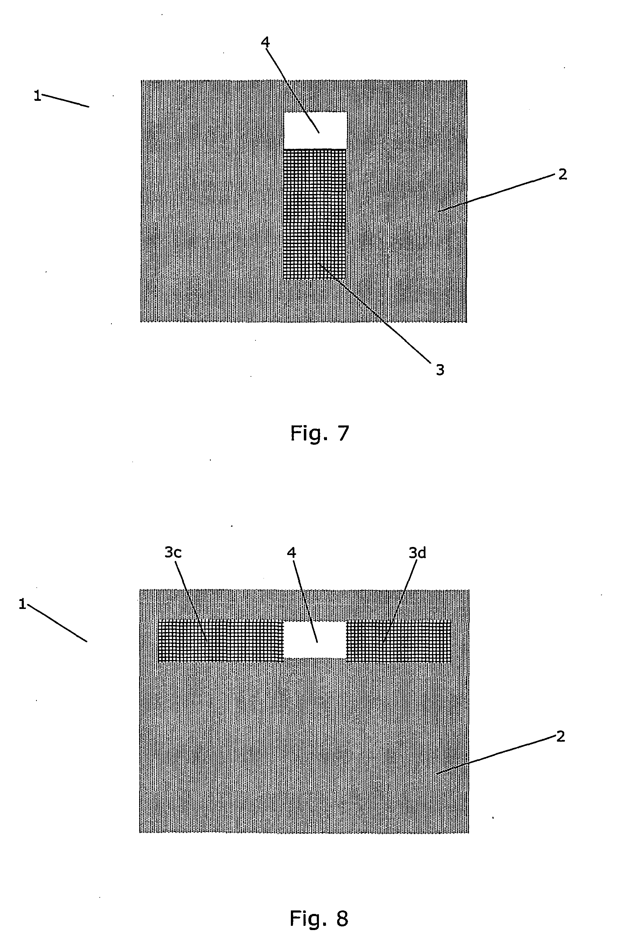

Fig. 7 is a cross sectional view of a flow system 1 according to yet another embodiment of the invention. The flow system 1 comprises a first part 2 with a flow channel 4 formed therein, and a second part 3. In the embodiment shown in Fig. 7 the material making up the first part 2 has a coefficient of thermal expansion which is lower than the coefficient of thermal expansion of the material making up the second part 3.

In the embodiment shown in Fig. 7 the second part 3 is positioned in a recess formed in the first part 2 at a position immediately adjacent to the flow channel 4. When the ambient temperature increases, the second part 3 will not be able to expand in a direction towards the first part 2. Material from the second part 3 will thereby be forced into the flow channel 4, thereby changing the size and/or the shape of the outer contour of the flow channel 4. Furthermore, the stress build-up in part 2 will also increase the width and concurrently decrease the height of channel 4 similar to Fig. 2. This results in an increase in the flow resistance of the flow channel 4. This increase in flow resistance can be adjusted to at least substantially counter-balance a decrease in flow resistance due to a decrease in viscosity of the fluid being transported by the flow system 1 in response to the increase in temperature. In the embodiment shown in Fig. 7 the size, shape and position of the second part 3 can be varied to obtain this. Thus, if the size of the second part 3 is increased, the amount of material being forced into the flow channel 4 will increase, and the increase in flow resistance will thereby become larger.

Fig. 8 is a cross sectional view of a flow system 1 according to yet another embodiment of the invention. The flow system 1 comprises a first part 2 with a flow channel 4 formed therein, and a second part 3. As it is the case in the embodiments shown in Figs. 2-7, the material making up the first part 2 has a coefficient of thermal expansion which is lower than the coefficient of thermal expansion of the material making up the second part 3.

In the embodiment of Fig. 8 the second part 3 comprises two portions 3c, 3d positioned on opposing sides of the flow channel 4. When the temperature increases and the material of the second part 3 accordingly expands, the material of the second part 3 can not expand towards the first part 2. The material is therefore forced into the flow channel 4, and the flow resistance is increased as described above.

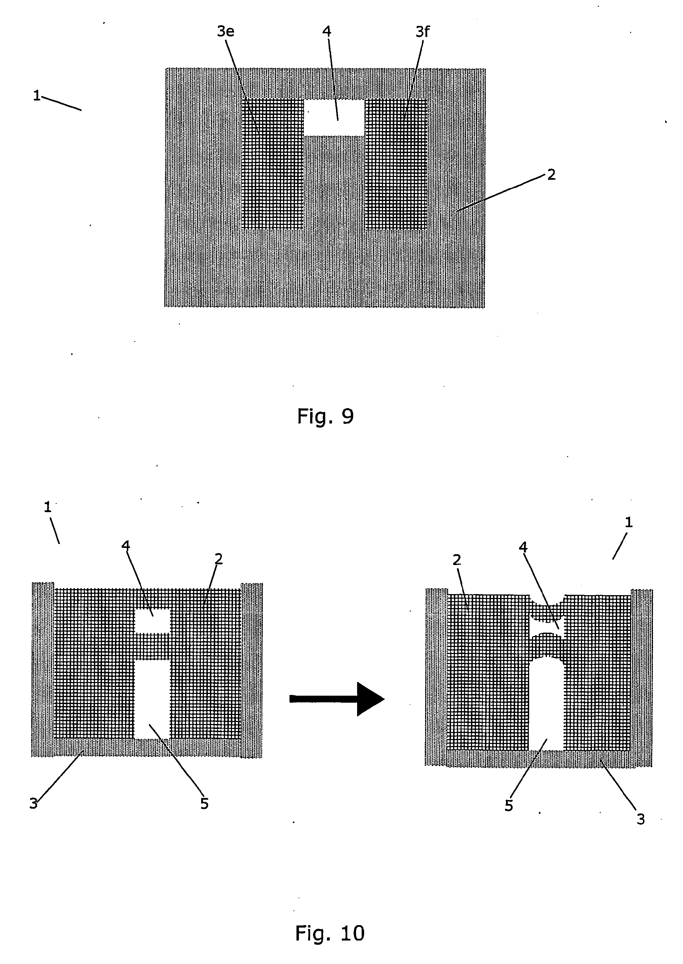

Fig. 9 is a cross sectional view of a flow system 1 according to yet another embodiment of the invention. The flow system 1 comprises a first part 2 with a flow channel 4 formed therein, and a second part 3. As it is the case in the embodiments shown in Figs. 2-8, the material making up the first part 2 has a coefficient of thermal expansion which is lower than the coefficient of thermal expansion of the material making up the second part 3.

In the embodiment of Fig. 9 the second part 3 also comprises two portions 3e, 3f positioned on opposing sides of the flow channel 4, and the mechanisms described in connection with Fig. 8 therefore apply equally here. However, in Fig. 9 the part 2 materials between portions 3e and 3f will in addition be compressed and, thus, expanded into channel 4. Thus, in this case the size, shape and position of the two portions 3e, 3f are slightly different from those shown in Fig. 8. Thus, it must be expected that the amount of material which is forced into the flow channel 4 might also be different.

It should be noted that various other designs of flow systems 1 could be envisaged, and that the embodiments shown in Figs. 1-9 and described above merely serve an illustrative purpose. The important feature is that, due to a difference in the coefficients of thermal expansion of the material making up the first part 2 and the material making up the second part 3, one of the parts 2, 3 restricts the thermal expansion of the other part 3, 2, and thereby the size and/or shape of the flow channel 4 is/are changed when the ambient temperature increases. This change leads to an increase in flow resistance which at least substantially counter-balances a decrease in flow resistance caused by an increase in viscosity of a fluid being transported in the flow system 1, due to the increased temperature.

Furthermore, it should be noted that when the ambient temperature decreases all of the mechanisms described above are reversed, i.e. the material having the highest coefficient of thermal expansion will contract and the flow resistance of the flow channel 4 will decrease. At the same time the viscosity of the fluid being transported in the flow system 1 increases as a consequence of the decrease in temperature, thereby increasing the flow resistance. Again, the two effects will at least substantially counter-balance each other.

Fig. 10 is a cross sectional view of a flow system 1 according to one embodiment of the invention shown at a low and a high temperature, respectively. The flow system 1 shown in Fig. 10 is of the kind which is also shown in Fig. 1. Thus, the left part of Fig. 10 corresponds to Fig. 1, i.e. it shows the flow system 1 at a relatively low temperature, and accordingly the flow system 1 is 'at rest' in the sense that no thermal expansion has taken place.

The right part of Fig. 10 shows the flow system 1 at a somewhat higher temperature. As described in connection with Fig. 1 it is assumed that the thermal expansion of the second part 3 is negligible as compared to the thermal expansion of an isolated first part 2. Thus, in the right part of Fig. 10 the material of the second part 3 has not expanded while the material of the first part 2 has expanded. The position of the second part 3 relatively to the first part 2 has the effect that the material of the first part 2 can not expand in the directions where the second part 3 is present. Accordingly, the material of the first part 2 expands towards the flow channel 4 and towards the additional channel 5. Thereby the shape and size of the cross sections of the flow channel 4 and the additional channel 5 are changed, and as a result the flow resistance of the flow channel 4 is increased. In Fig. 10 it is shown that the material present between the flow channel 4 and the additional channel 5 and the material present above the flow channel 4 bend into the flow channel 4.

This happens because the cross sectional areas of these portions of the first part 2 are relatively small, and these portions therefore represent 'weak' regions of the first part 2. It should be noted that it is possible to design the shapes of the flow channel 4 and the additional channel 5 in such a way that it is ensured that the material bends into the flow channel 4 rather than away from the flow channel 4.

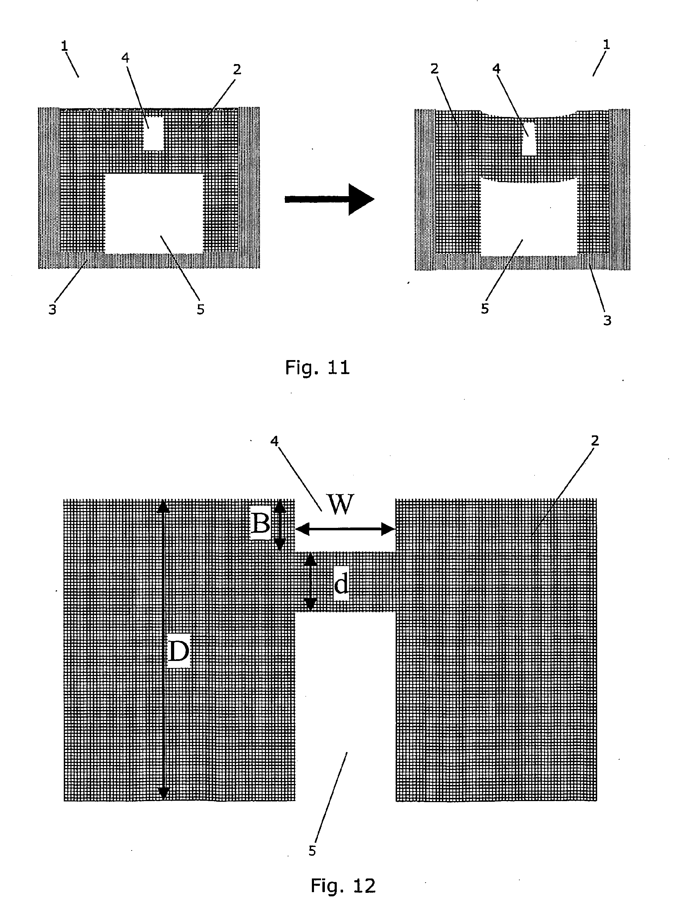

Fig. 11 is a cross sectional view of a flow system 1 according to another embodiment of the invention shown at a low and a high temperature, respectively. The flow system 1 shown in Fig. 11 is very similar to the one shown in Fig. 10. However, in Fig. 11 the additional channel 5 is larger, and the size and shape of the cross section of the flow channel 4 are therefore affected in a different manner when the ambient temperature increases. However, an increase in the ambient temperature will also in this case result in an increase in the flow resistance of the flow channel 4.

Fig. 12 is a cross sectional view of part of the flow system of Fig. 1. In Fig. 12 only the first part 2 with the flow channel 4 and the additional channel 5 formed therein is shown. The first part 2 shown in Fig. 12 could be a polymer chip.

Fig. 12 illustrates the rate of flow resistance change as the ambient temperature increases. This rate is given by:

$$\frac{dFR}{dT} = 12L\left(\frac{\frac{d\nu}{dT}}{(0.92B - 0.5W)W^3} - \frac{\nu W^3(2.76B - 2W)}{\left((0.92B - 0.5W)W^3\right)^2}\alpha(1 - \frac{D}{d})\right),$$

wherein L is the length of a flow restricting section of the flow channel 4, $\alpha$ is the coefficient of thermal expansion of the material making up the first part 2, and $\gamma$ is the viscosity of the fluid being transported in the flow channel 4. It has been assumed that the coefficient of thermal expansion of the second part (not shown) is zero, i.e. it has been assumed that the thermal expansion of the second part is negligible as compared to thermal expansion of the first part 2. This has been described above. Furthermore, as it appears from the Figure, B is the height of the flow channel 4, W is the width of the flow channel 4, d is the distance between the flow channel 4 and the additional channel 5, and D is the height of the first part 2.

In order to ensure that the flow resistance of the flow channel 4 is independent of the ambient temperature within a certain temperature range, the above equation should be equal to zero. Solving for D/d yields:

$$\frac{D}{d} = 1 - \frac{\frac{d\nu}{dT}(0.92B - 0.5W)}{\alpha\nu(2.76B - 2W)}.$$

Using the following values:

$$B = 20 \ \mu m$$

$$W = 20 \ \mu m$$

$$\alpha = 5 \times 10^{-4} \ K^{-1}$$

$$\nu = 0.89 \times 10^{-3} \ Pa \ s$$

$$d\nu/dT = -0.0205 \times 10^{-3} \ Pa \ s \ K^{-1}$$

the above equation yields D/d=26.5. Thus, if the polymer chip has a thickness of 2 mm, d is given by 75.5 $\mu$m. Accordingly,

the depth of the additional channel 5 is 1.90 mm. It should be noted that in the calculations performed above, effects arising from a lid of the first part 2, i.e. material positioned above the flow channel 4, are omitted. In order to take such effects into account, it may be assumed that 'd' in the above calculations represents an effective combined height of the lid and the portion of the first part 2 positioned between flow channel 4 and the additional channel 5.

The calculation above is an example of how it is possible to design the size, shape and position of the additional channel 5 in such a way that the changes in flow resistance caused by a change in viscosity due to a change in ambient temperature can be counteracted by a change in flow resistance caused by a change in the size and/or shape of the flow channel 4 due to the same change in ambient temperature. Thereby the additional channel 5 insures a passive calibration of the thermal expansion of the first part 2 into the flow channel 4 to give the desired flow resistance/temperature relation, the calibration being build into the system.

**Claims**

1.  A flow system (1) comprising:

    - a first part (2) made from a first material having a first coefficient of thermal expansion, said first part having at least one flow channel (4) formed therein,
    - a second part (3) made from a second material having a second coefficient of thermal expansion, said second coefficient of thermal expansion being different from said first coefficient of thermal expansion,

    the first part (2) and the second part (3) are arranged relatively to each other in such a way that, in response to a change in an ambient temperature, the first (2) and the second (3) parts cooperate to cause corresponding change(s) in cross section and/or the shape of the flow channel(s) (4), **characterized in that** the first part (2) and/or the second part (3) is/are further provided with one or more additional channels (5, 7a, 7b), said additional channel(s) (5, 7a, 7b) being positioned in such a way that it/they cooperate with the first (2) and second (3) parts in causing corresponding change(s) in the flow channel(s) (4).

2.  A flow system (1) according to claim 1, wherein the first coefficient of thermal expansion is higher than the second coefficient of thermal expansion, and wherein the first (2) and second (3) parts are arranged relatively to each other in such a way that the second part (3) restricts thermal expansion of the first part (2) in at least one direction.

3.  A flow system (1) according to claim 2, wherein the first material comprises a polymer material.

4.  A flow system (1) according to claim 2 or 3, wherein the second material comprises a metal and/or a semiconductor.

5.  A flow system (1) according to any of the preceding claims, wherein the corresponding change(s) in the flow channel(s) (4) comprises a change in a cross sectional area of at least one of the flow channel(s) (4).

6.  A flow system (1) according to any of the preceding claims, wherein the corresponding change(s) in the flow channel(s) (4) comprises a change in a shape of at least one of the flow channel(s) (4).

7.  A flow system (1) according to any of the preceding claims, wherein the specified temperature range is -15°C to 50°C.

8.  A flow system (1) according to any of the preceding claims, wherein at least the at least one section is or comprises a flow restriction.

9.  A flow system (1) according to any of the preceding claims, wherein the first coefficient of thermal expansion and/or the second coefficient of thermal expansion is within the range $10^{-6}$ per °C to $10^{-3}$ per °C.

10. A micro fluidic system comprising an inlet opening, an outlet opening and at least one flow system (1) according to any of claims 1-9.

11. A micro fluidic system according to claim 10, wherein the micro fluidic system is or forms part of a fluid analysis device.

12. A micro fluidic system according to claim 11, wherein the micro fluidic system is or forms part of an infusion system.

13. A micro fluidic system according to claim 10, wherein the micro fluidic system is or forms part of a drug delivery system.

**Patentansprüche**

1. Strömungssystem (1)

   - mit einem ersten Teil (2), das aus einem ersten Material hergestellt ist, welches über einen ersten thermischen Expansionskoeffizienten verfügt, wobei in dem ersten Teil wenigstens ein Strömungskanal (4) ausgebildet ist, und
   - mit einem zweiten Teil (3), das aus einem zweiten Material hergestellt ist, welches einen zweiten thermischen Expansionskoeffizienten aufweist, wobei der zweite thermisch Expansionskoeffizient von dem ersten thermischen Expansionskoeffizient verschieden ist,

   wobei das erste Teil (2) und das zweite Teil (3) in Bezug aufeinander so angeordnet sind, dass als Reaktion auf eine Änderung in einer Umgebungstemperatur das erste Teil (2) und das zweite Teil (3) zusammenwirken, um entsprechende Änderung(en) im Querschnitt und/oder in der Gestalt des oder jedes Strömungskanals (4) hervorzurufen, **dadurch gekennzeichnet, dass** das erste Teil (2) und/oder das zweite Teil (3) weiterhin mit einem oder mehreren zusätzlichen Kanälen (5, 7a, 7b) ausgestattet ist/sind, wobei der oder jeder zusätzliche Kanal (5, 7a, 7b) so angeordnet ist, dass er mit dem ersten Teil (2) und mit dem zweiten Teil (3) zusammenwirkt, um die entsprechende (n) Änderung(en) in dem oder jedem Strömungskanal (4) zu verursachen.

2. Strömungssystem (1) nach Anspruch 1, wobei der erste thermische Expansionskoeffizient größer als der zweite thermische Expansionskoeffizient ist und wobei das erste Teil (2) sowie das zweite Teil (3) in Bezug aufeinander so angeordnet sind, dass das zweite Teil (3) die thermische Expansion des ersten Teiles (2) in wenigstens einer Richtung beschränkt.

3. Strömungssystem (1) nach Anspruch 2, wobei das erste Material ein Polymermaterial aufweist.

4. Strömungssystem (1) nach Anspruch 2 oder 3, wobei das zweite Material ein Metall und/oder einen Halbleiter aufweist.

5. Strömungssystem (1) nach einem der vorangehenden Ansprüche, wobei die entsprechende Änderung(en) in dem oder jedem Strömungskanal (4) eine Änderung in einem Querschnittsbereich wenigstens eines Strömungskanals (4) umfasst.

6. Strömungssystem (1) nach einem der vorangehenden Ansprüche, wobei die entsprechende Änderung(en) in dem jeweiligen Strömungskanal (4) eine Änderung in einer Gestalt wenigstens eines Strömungskanals (4) umfasst.

7. Strömungssystem (1) nach einem der vorangehenden Ansprüche, bei dem der spezifizierte Temperaturbereich -15°C bis 50 °C ist.

8. Strömungssystem (1) nach einem der vorangehenden Ansprüche, bei dem wenigstens der wenigstens eine Querschnitt eine Strömungsverengung ist oder aufweist.

9. Strömungssystem (1) nach einem der vorangehenden Ansprüche, bei dem der erste thermische Expansionskoeffizient und/oder der zweite thermische Expansionskoeffizient im Bereich von $10^{-6}$ pro °C bis $10^{-3}$ pro °C liegt beziehungsweise liegen.

10. Mikrofluidsystem, das eine Einlassöffnung, eine Auslassöffnung und wenigstens ein Strömungssystem (1) nach einem der Ansprüche 1-9 aufweist.

11. Mikrofluidsystem nach Anspruch 10, bei dem das Mikrofluidsystem ein Teil einer Fluidanalysevorrichtung ist oder bildet.

12. Mikrofluidsystem nach Anspruch 11, bei dem das Mikrofluidsystem ein Teil eines Einspritzsystems ist oder bildet.

13. Mikrofluidsystem nach Anspruch 10, bei dem das Mikrofluidsystem ein Teil eines Medikamentenzuführsystems ist oder bildet.

**Revendications**

1.  Système d'écoulement (1) comprenant :

    - une première partie (2) à base d'un premier matériau ayant un premier coefficient de dilatation thermique, ladite première partie possédant au moins un canal d'écoulement (4) formé à l'intérieur de celle-ci,
    - une seconde partie (3) à base d'un second matériau ayant un second coefficient de dilatation thermique, ledit second coefficient de dilatation thermique étant différent dudit premier coefficient de dilatation thermique,

    la première partie (2) et la seconde partie (3) étant disposées l'une par rapport à l'autre de telle sorte que, en réponse à une variation de température ambiante, la première (2) et la seconde (3) parties coopèrent pour entraîner une ou des variations correspondantes de la section transversale et/ou de la forme du ou des canaux d'écoulement (4), système **caractérisé en ce que** la première partie (2) et/ou la seconde partie (3) est/sont en outre munies d'un ou plusieurs canaux supplémentaires (5, 7a, 7b), le ou lesdits canaux supplémentaires (5, 7a, 7b) étant placés de telle sorte qu'il(s) coopère(nt) avec la première (2) et la seconde (3) parties en entraînant une ou des variations correspondantes du ou des canaux d'écoulement (4).

2.  Système d'écoulement (1) selon la revendication 1, dans lequel le premier coefficient de dilatation thermique est supérieur au second coefficient de dilatation thermique, et dans lequel la première (2) et la seconde (3) parties sont disposées l'une par rapport à l'autre de telle sorte que la seconde partie (3) restreint la dilatation thermique de la première partie (2) dans une direction au moins.

3.  Système d'écoulement (1) selon la revendication 2, dans lequel le premier matériau comprend un matériau polymère.

4.  Système d'écoulement (1) selon la revendication 2 ou 3, dans lequel le second matériau comprend un métal et/ou un semiconducteur.

5.  Système d'écoulement (1) selon l'une quelconque des revendications précédentes, dans lequel la ou les variations correspondantes du ou des canaux d'écoulement (4) comprend une variation de superficie de la section transversale de l'un au moins des canaux d'écoulement (4).

6.  Système d'écoulement (1) selon l'une quelconque des revendications précédentes, dans lequel la ou les variations correspondantes du ou des canaux d'écoulement (4) comprend une variation de forme de l'un au moins des canaux d'écoulement (4).

7.  Système d'écoulement (1) selon l'une quelconque des revendications précédentes, dans lequel la plage de températures préconisée est de - 15 °C à 50 °C.

8.  Système d'écoulement (1) selon l'une quelconque des revendications précédentes, dans lequel au moins la au moins une section est ou comprend une restriction d'écoulement.

9.  Système d'écoulement (1) selon l'une quelconque des revendications précédentes, dans lequel le premier coefficient de dilatation thermique et/ou le second coefficient de dilatation thermique est/sont compris dans la plage de $10^{-6}$ par °C à $10^{-3}$ par °C.

10. Système micro-fluidique comprenant un orifice d'entrée, un orifice de sortie et au moins un système d'écoulement (1) selon l'une quelconque des revendications 1 à 9.

11. Système micro-fluidique selon la revendication 10, dans lequel le système micro-fluidique est un dispositif d'analyse de fluides ou en fait partie.

12. Système micro-fluidique selon la revendication 11, dans lequel le système micro-fluidique est un système de perfusion ou en fait partie.

13. Système micro-fluidique selon la revendication 10, dans lequel le système micro-fluidique est un système de délivrance de médicament ou en fait partie.

Fig. 1

Fig. 2

Fig. 3

Fig. 4

Fig. 5

Fig. 6

Fig. 7

Fig. 8

Fig. 9

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3977600 A
- US 4759883 A